# EUROPEAN PATENT APPLICATION

(11) **EP 4 340 189 A1**
(43) Date of publication of application: **20.03.2024**
(21) Application number: 22196067.7
(22) Date of filing: 16.09.2022
(51) Int. Cl.: H02K 5/24, E06B 9/72, H02K 7/116

(54) **BUILDING APERTURE COVER DRIVE COMPRISING CO-MOLDED RESILIENT MOUNTING ARRANGEMENT**

(71) Applicant: VKR Holding A/S, 2970 Hørsholm (DK)
(72) Inventor: LAURIDSEN, Nikolaj Hannibal, 2970 Hørsholm (DK)
(74) Representative: Høiberg P/S

(57) **Abstract**

The present disclosure relates to an architectural aperture cover drive (1) comprising
- a cover drive housing (10) comprising walls enclosing a housing space (11),
- a drive arrangement (20) arranged in said housing space (11), where said drive arrangement comprises an electric drive motor (21) comprising a driving part. and
- a resilient mounting arrangement (2) comprising one or more resilient dampers (3, 4) configured to provide a resilient mounting of the drive arrangement (20) in the housing space (11).

At least one of said one or more resilient dampers (3, 4) is a co-molded damper (3) comprising a resilient damper arrangement (5) and a support arrangement (6). The resilient damper arrangement (5) comprises a first material and the support arrangement (6) comprises a second material. The resilient damper arrangement (5) and the support arrangement (6) are co-molded and said first material is softer than the second material.

## Description

The present disclosure relates to an architectural aperture cover drive and an architectural aperture cover comprising an architectural aperture cover drive.

### Background

Various types of fenestration and window treatment drives for operating an architectural aperture cover of a building, such as a sun protection arrangement or a movable frame of a window or door exists. These may e.g. comprise a drive arrangement comprising an electric motor and a gear inside in a housing. However, such architectural cover drives may be acoustically noisy during operation, which may be disturbing for persons in a room where the architectural cover is placed. In some situations, home automation systems may control the architectural cover drive automatically based on sensor input and/or time, and this may be even more disturbing as such control may happen unexpected to the user and even in some cases in quiet rooms or at rooms where people sleep. Sometimes many drives at the same room may be driven at once/simultaneously which may increase the drive noise. Architectural drives are also subject to other requirements such as being space saving and cost efficiency. Architectural drives are also often retrofitted and need to be compatible with and fit various product sizes such as fenestration sizes and window treatment sizes.

It is known to provide dampers to reduce noise caused by drive vibrations transmitted from the drive arrangement to a tube or housing. Examples are patent document DE202012001206U1 which discloses a chain actuator with damping motor sleeves. DE202017100632U1 discloses a tubular motor damper support and WO12149067 shows a tubular motor with a vibration suppression arrangement. However, some of the above solutions may provide manufacturing errors and/or be cost expensive.

The present disclosure may provide a space saving solution, may improve cost efficiency and/or may help to increase the yield of correctly manufactured architectural aperture cover drives.

### Summary

The present inventor has realized that manufacturing mistakes may happen when resilient vibration dampers made from a one-piece resilient material such as silicone, rubber or the like thermoplastic polyurethane is to be arranged in a cover drive housing space together with a drive arrangement of an architectural aperture cover drive. The reason for this may be that such vibration dampers are often soft in order to improve vibration damping, but this may increase the risk of installation errors and also, such dampers may additionally or alternatively be time consuming to install during manufacturing/assembling of the architectural aperture cover drive. Hence, even though such one piece resilient dampers may themselves be cost efficient, it has come to the inventor's attention that they may in fact provide a more cost expensive end product due to longer manufacturing time and/or installation/assembling errors related to the installation of such resilient vibration dampers.

The present disclosure relates to an architectural aperture cover drive comprising
- a cover drive housing comprising walls enclosing a housing space,
- a drive arrangement arranged in said housing space, where said drive arrangement comprises an electric drive motor comprising a driving part, and
- a resilient mounting arrangement comprising one or more resilient dampers configured to provide a resilient mounting of the drive arrangement in the housing space.

At least one of said one or more resilient dampers is a co-molded damper comprising a resilient damper arrangement and a support arrangement. The resilient damper arrangement comprises a first material and the support arrangement comprises a second material. The resilient damper arrangement and the support arrangement are co-molded and the first material is softer than the second material.

The support arrangement increases the over-all hardness of the co-molded damper while the resilient damper arrangement provides a damper with good vibration damping properties. As the support arrangement material is harder than the material of the resilient damper arrangement, the support arrangement hence provides a structural support for the resilient damper arrangement. This support arrangement thus enables a damper that may be faster and/or more easy to install and interface with a predefined cooperating structure of the drive arrangement and/or cover drive housing. This may increase overall cost efficiency of the architectural aperture cover drive and/or reduce assembly time and reduce manufacturing errors and hence increase the yield of correctly assembled architectural aperture cover drives.

Mainly the resilient damper arrangement will thus be compressed and/or deformed due to the vibrations from the drive arrangement when the electric motor is active, and this reduces acoustic noise from the architectural aperture cover drive. When the motor starts, vibrations will be absorbed/handled by the resilient damper arrangement, and when the motor stops, the resilient damper arrangement will return to its original/initial size and/or shape as it were before the motor started.

The damper is co-molded which may also include overmolded. For example multi shot injection molded or insertion molded. Hereby a single assembly unitary damper may be provided with several advantages.

In one or more embodiments of the present disclosure, one of the support arrangement and the resilient damper arrangement interfaces with, such as abuts, the cover drive housing and the other of the support arrangement and the resilient damper arrangement interfaces with, such as abut, the drive arrangement.

In one or more embodiments of the present disclosure, the support arrangement comprises position maintaining means configured to maintaining the co-molded damper in a predefined position relative to the drive arrangement inside said housing space.

In one or more embodiments of the present disclosure, the first and second materials cohesively bonds due to the material characteristics of the first and second material.

In one or more embodiments of the present disclosure, the co-molded damper is positive engagement shaped.

In one or more embodiments of the present disclosure, the resilient damper arrangement comprises one or more parts arranged between the drive arrangement and the cover drive housing so as to provide the resilient mounting of the drive arrangement in the housing space.

In one or more embodiments of the present disclosure, said resilient mounting of the drive arrangement in the housing space may be provided so that the drive arrangement is allowed to move relative to the cover drive housing in the housing space in response to a torque applied by means of the motor drive due to the resiliency of the resilient damper arrangement.

In one or more embodiments of the present disclosure, the resilient damper arrangement may consist of the first material

In one or more embodiments of the present disclosure, the support arrangement may consist of the second material.

The first material may in one or more embodiments of the present disclosure be more resilient than the second material.

In one or more embodiments of the present disclosure, the support arrangement may be attached to one of the cover drive housing or the drive arrangement by means of mechanical fastening means. In one or more embodiments of the present disclosure, the mechanical fastening means may comprise a locking system.

This provides a solution where further insurance of correct damper installation may be assured. Attaching the support arrangement to one of the cover drive housing or the drive arrangement by means of mechanical fastening means may enable a faster manufacturing such as a faster assembling.

In other embodiments of the present disclosure, the support arrangement may not be attached to the cover drive housing or the drive arrangement by means of fastening means. Instead, the co-molded damper may be placed unattached inside the housing space between the drive arrangement and the cover drive housing, e.g. by means of clamping.

The support arrangement may here comprise position maintaining means configured to maintaining the co-molded damper in a predefined position relative to the drive arrangement inside the housing space. E.g. by comprising one or more protrusions or recesses that engages with one or more protrusions or recesses in one of the cover drive housing or the drive arrangement.

In one or more embodiments of the present disclosure, a housing of the drive arrangement, such as a gear housing of the drive arrangement, directly or indirectly supports the support arrangement of the co-molded damper. Here, the support arrangement may in further embodiments of the present disclosure be attached to the housing.

In one or more embodiments of the present disclosure, the resilient mounting arrangement may resiliently suspend the drive arrangement in the housing space. Thus, rotations of one or more movable parts of the drive arrangement may induce forces that may cause the drive arrangement to move, such as rotate, move in one or more linear directions or the like, and this may be allowed due to the resiliency of the resilient mounting arrangement such as the resiliency of the resilient damper arrangement of the co-molded damper.

In one or more embodiments of the present disclosure, the mechanical fastening means may comprise at least one of a snap lock arrangement, a bayonet mount, one or more tabs, one or more notches, one or more holes for a fastener and/or screws.

In one or more embodiments of the present disclosure, the support arrangement comprises a first part of the fastening means. In further embodiments, said first part of the fastening means may be unitary with and comprises the second material.

This provides a solution that may be easy to install and which may be cost efficient.

In one or more embodiments of the present disclosure, the first part of the fastening mans may be a counter part of the fastening means, and the other part of the fastening means may be placed at a housing part of the drive arrangement.

The second part of the fastening means may be arranged at, such as integrated in, the drive arrangement, such as a drive arrangement housing, or at the cover drive housing.

In one or more embodiments of the present disclosure, the support arrangement may be attached to the drive arrangement, such as to a housing of the drive arrangement.

This may help to ease installation and provide an advantageous manufacturing process.

In one or more embodiments of the present disclosure, the drive arrangement comprises a gear arrangement configured to be driven by the driving part of the motor, where said gear arrangement comprises an output drive.

In one or more embodiments of the present disclosure, the support arrangement may comprise a structural part of the drive arrangement, such as a structural part of a housing of the drive arrangement.

In one or more embodiments of the present disclosure, the support arrangement may be unitary with and provide a housing part of the drive arrangement. In further embodiments of the present disclosure, said housing part may comprise an end cap or a body part of the drive arrangement, for example an end cap part or a body part of a gear arrangement housing of the drive arrangement.

This provides a space saving and/or cost efficient solution. Moreover, it may help to provide that the resilient damper arrangement is integrated with the drive arrangement and help to assure a correct installation of the damping arrangement.

In one or more embodiments of the present disclosure, the housing part may comprises one or more guiding members and/or holding members which guides and/or holds one or more movable parts of the drive arrangement. In one or more embodiments of the present disclosure, the one or more movable parts may be one or more movable parts of a gear arrangement.

This provides a space saving and/or cost efficient solution. The co-molded damper hence provides a dual functionality as it both provides guiding members and/or holding members for movable parts of the drive arrangement while also providing the support arrangement of the co-molded damper that provides a structural support for the resilient damper arrangement. A movable part of the drive arrangement may comprise one or more of for example a motor or gear output shaft or a tacho hall sensor. A movable part of the gear arrangement may comprise one or more of for example a journal, bushing, bearing, gear shaft, planetary gear part, toothed wheel, planetary gear crown.

As mentioned above, the first material is softer than the second material this may be determined by the Shore A value and/or the E modulus of the first and second material.

In one or more embodiments of the present disclosure, the first material comprises a resilient material having a Shore A value below 90, such as below 80, preferably below 70.

This may e.g. provide advantages with regards to mounting and/or vibration damping.

In one or more embodiments of the present disclosure, the first material consist of a resilient material having a Shore A value below 90, such as below 80, preferably below 70.

In one or more embodiments of the present disclosure, the first material comprises a resilient material having a Shore A value between 30 and 90, such as between 40 and 80, preferably between 50 and 70, such as around 60.

In one or more embodiments of the present disclosure, the first material consist of a resilient material having a Shore A value between 30 and 90, such as between 40 and 80, preferably between 50 and 70, such as around 60.

In one or more embodiments of the present disclosure, the first material may comprise a thermoplastic polyurethane, rubber or silicone.

In one or more embodiments of the present disclosure, the first material may consist of a thermoplastic polyurethane, rubber or silicone.

In one or more embodiments of the present disclosure, the second material of the support arrangement comprises a material having an E modulus above 1000 MPa such as above 3000 MPa, preferably above 5000 MPa.

This may e.g. provide structural advantages and/or help to ease assembly.

In one or more embodiments of the present disclosure, the second material of the support arrangement consist of a material having an E modulus above 1000 MPa such as above 3000 MPa, preferably above 5000 MPa.

In one or more embodiments of the present disclosure, said second material of the support arrangement of the co-molded damper may comprise a material having an E-Modulus (modulus of elasticity) between 1000 MPa and 15000 MPa, such as between 2000 MPa and 13000 MPa, preferably between 2000 MPa and 10000 MPa

In one or more embodiments of the present disclosure, said second material of the support arrangement of the co-molded damper may consist of a material having an E-Modulus (modulus of elasticity) between 1000 MPa and 15000 MPa, such as between 2000 MPa and 13000 MPa, preferably between 2000 MPa and 10000 MPa

In one or more embodiments of the present disclosure, the second material of the support arrangement may comprise a polymer, such as a plastic material such as a thermoplastic and/or a polybutylene terephthalate (PBT) plastic, an Akrylonitril-butadien-styren (ABS) plastic or a polyamide (PA) plastic.

In one or more embodiments of the present disclosure, the second material of the support arrangement may consist of a polymer, such as a plastic material such as a thermoplastic and/or a polybutylene terephthalate (PBT) plastic, an Akrylonitril-butadien-styren (ABS) plastic or a polyamide (PA) plastic.

In one or more embodiments of the present disclosure the second material of the support arrangement may comprise polypropylene (PP), polycarbonate (PC), polyoxymethylene (POM) or polyvinylchloride (PVC).

In one or more embodiments of the present disclosure the second material of the support arrangement may consist of polypropylene (PP), polycarbonate (PC), polyoxymethylene (POM) or polyvinylchloride (PVC).

In one or more embodiments the second material may be fiber reinforced.

In one or more embodiments the second material and the first material create an adhesive bond and/or a cohesive bond. Hereby the co-molded parts become unitary.

In one or more embodiments of the present disclosure, said resilient damper arrangement comprises one or more resilient contact tongues. In further embodiments of the present disclosure, the one or more resilient contact tongues comprises a tapering shape, such as comprising a proximate part arranged proximate a main body of the resilient damper arrangement, and a distal part, where the proximal part is wider than the distal part.

This may e.g. help to provide an improved vibration damping and improved noise reduction

If the resilient contact tongues comprises a proximate part arranged proximate a main body of the resilient damper arrangement, and a distal part, where the proximal part is wider than the distal part, This may help to provide an initial and fast deflection of the resilient damper arrangement when the drive arrangement starts applying a compression force, but a gradually larger resistance towards further deflection when/if the forces from the drive arrangement increases.

In one or more embodiments of the present disclosure, said resilient damper arrangement comprises one or a plurality of discretely arranged contact tongues.

In embodiments of the present disclosure, the co-molded damper may be configured to provide progressive damping.

In embodiments of the present disclosure, the resilient damper arrangement may be configured to provide a damper with a vibration attenuating function. Moreover, the resilient damper arrangement may be configured to provide a spring characteristic providing a resiliency. One or both of the vibration attenuating function spring characteristic may mainly be provided by the first material. For example a silicone material, but also other materials such as a rubber material or a thermoplastic elastomer TPE may in embodiments of the present disclosure provide both an advantageous spring characteristic and vibration attenuating function.

In one or more embodiments of the present disclosure, said resilient damper arrangement may comprise a main body that is co-molded with said support arrangement. The resilient damper arrangement may comprises one or more contact parts, such as resilient contact tongues, extending from said main body.

This may help to provide a more simple co-molded damper that may help to provide an improved vibration damping and improved noise reduction while reducing costs. Preferably, said main body of the resilient damper arrangement may be unitary with the plurality of resilient contact tongues extending from the main body.

The resilient damper arrangement may extend over the circumference of the support arrangement. The support arrangement may e.g. be annular and/or flange shaped.

In one or more embodiments of the present disclosure, the resilient damper arrangement may comprise parts which extend beyond the support arrangement perpendicular to and/or radially from, a longitudinal direction of the drive arrangement.

In one or more embodiments of the present disclosure, the resilient damper arrangement may comprises parts which form the damper extremities, such as perpendicular to the longitudinal direction.

In one or more embodiments of the present disclosure, the housing space may be placed between opposing outer walls of the cover drive housing, and wherein the co-molded damper is arranged to extend between the opposing outer walls of the cover drive housing.

In one or more embodiments of the present disclosure, the housing space may be placed between opposing outer walls of the cover drive housing, and the co-molded damper may be arranged abut the opposing outer walls of the cover drive housing.

In one or more embodiments of the present disclosure, the co-molded damper may be clamped between a housing part of the drive arrangement and the cover drive housing

In one or more embodiments of the present disclosure, the co-molded damper may be clamped between opposing wall parts of the cover drive housing.

In one or more embodiments of the present disclosure, a rotor of the drive motor and/or a gear wheel of a gear arrangement of the drive arrangement is/are arranged to rotate around a rotation axis, wherein said rotation axis extends through the co-molded damper.

In one or more embodiments of the present disclosure, the resilient contact tongues may be radially extending.

In one or more embodiments of the present disclosure, the resilient damper arrangement has more than two resilient contact tongues, such as more than three contact tongues, for example more than four or five contact tongues.

In some embodiment of the present disclosure, the contact tongue has a cross sectional shape of a polygon, for example a triangle, a trapeze or a rectangle.

The drive arrangement motor may in some embodiments be arranged inside in a tubular motor housing and/or or arranged at or in a top rail or a bottom rail of a sun screening.

In one or more embodiments of the present disclosure, the drive arrangement extends in a longitudinal direction between a first end and a second end of the drive arrangement, wherein the co-molded damper is arranged opposite to one of said ends of the drive arrangement.

In one or more embodiments of the present disclosure, the drive arrangement extends in a longitudinal direction between a first end and a second end of the drive arrangement, wherein the co-molded damper provides one of said ends of the drive arrangement.

This may e.g. provide advantageous damping of vibrations and/or may help to provide a solution that may be more easy to manufacture, such as assemble.

In one or more embodiments of the present disclosure, the architectural aperture cover drive may be a drive of or for a sun protection arrangement such as an awning, a roller shutter or a blind, such as a roller blind, pleated blind or venetian blind.

In one or more embodiments of the present disclosure, the architectural aperture cover drive may be a drive of or for a fenestration moving frame such as chain actuator, spindle actuator or arm actuator.

The architectural aperture cover drive may in embodiments of the present disclosure be a linear actuator drive of an architectural aperture cover or a tubular motor drive of an architectural aperture cover.

The architectural aperture cover may in embodiments of the present disclosure comprise or be a window, and the cover drive may be configured to move a movable frame of the window, it may be an architectural shading such as a roller shutter, a blind such as a venetian blind or a roller blind.

The present disclosure moreover relates to an architectural aperture cover comprising an architectural aperture cover drive according to one or more of the above mentioned embodiments and/or according to one or more of claims 1-14, wherein the a architectural aperture cover is a sun protection arrangement such as an awning, a roller shutter or a blind, such as a roller blind, pleated blind or venetian blind.

The present disclosure moreover relates to an architectural aperture cover comprising an architectural aperture cover drive according to one or more of the above mentioned embodiments and/or according to one or more of claims 1-14, wherein the architectural aperture cover is a window or a door, and wherein the architectural aperture cover drive is configured to move a movable frame of the window or door.

### Figures

Aspects of the present disclosure will be described in the following with reference to the figures in which:
- fig. 1: : illustrates a drive arrangement comprising a resilient mounting arrangement, according to embodiments of the present disclosure,
- fig. 2: : illustrates a co-molded damper, according to embodiments of the present disclosure,
- fig. 3: : illustrates an architectural aperture cover drive according to embodiments of the present disclosure,
- fig. 4: : illustrates an architectural aperture cover drive according to further embodiments of the present disclosure,
- fig. 5: : illustrates a drive arrangement according to further embodiments of the present disclosure,
- fig. 6: : illustrates a tubular drive arrangement according to embodiments of the present disclosure,
- figs. 7a -7b: : illustrates a cover drive comprising a co-molded damper according to further embodiments of the present disclosure,
- fig. 8: : illustrates a co-molded damper where a support arrangement is enclosed by a resilient damper arrangement, according to embodiments of the present disclosure,
- figs. 9a-9b: : illustrates damper comprising two damper parts configured to be locked together, according to embodiments of the present disclosure,
- fig. 10: illustrates a damper comprising a resilient damper arrangement with a substantially circular outer periphery, according to embodiments of the present disclosure,
- fig. 11: : illustrates a resilient damper arrangement comprising a circular or annular outer periphery that is configured to abut an interior circular wall surface,
- fig. 12: : illustrates an architectural aperture cover according to embodiments of the present disclosure, and
- fig. 13: : illustrates a window according to embodiments of the present disclosure.

### Detailed description

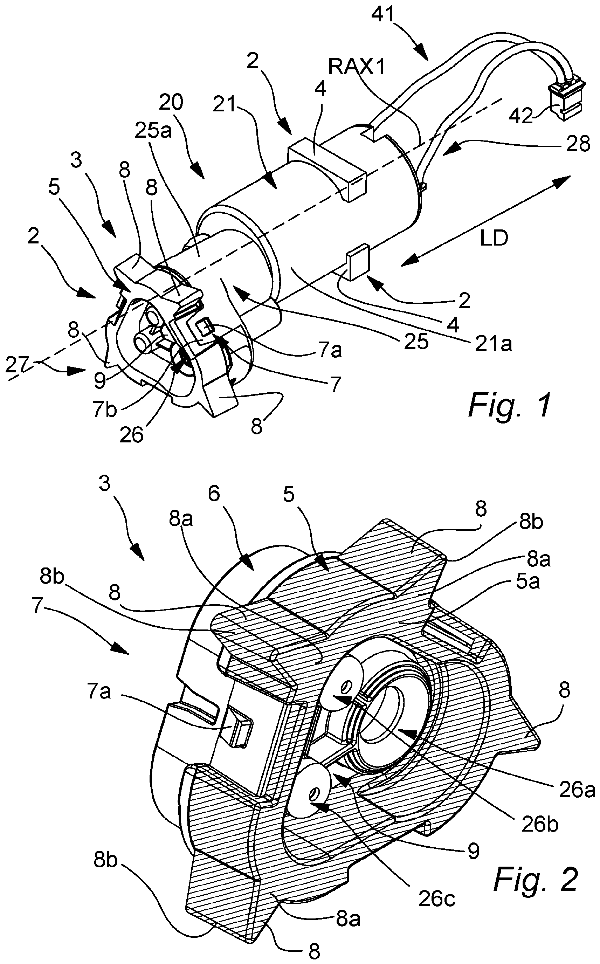

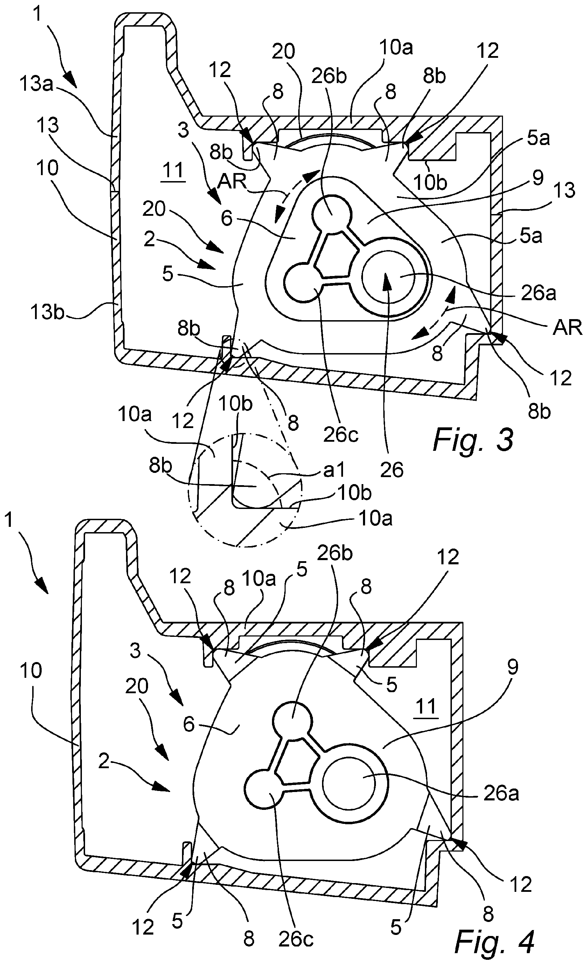

Fig. 1 illustrates schematically and in perspective a drive arrangement 20 according to embodiments of the present disclosure, for an architectural aperture cover drive 1 (see e.g. figs 3-4).

The drive arrangement comprises an electric drive motor 21 comprising a driving part (not illustrated in fig. 1). The drive motor 21 is configured to be driven by means of a battery (not illustrated) by connecting the electric motor 21 to the battery by means of wires 41 and a plug 42 connection. The movable parts of the motor 21 are placed inside a motor housing 21a, in this case a tubular motor housing.

The drive arrangement 20 of fig. 1 moreover comprises a gear arrangement 25. The gear arrangement 25 is configured to be driven by the driving part of the motor 21, and the gear arrangement comprises an output drive 26. The gear 25 may e.g. comprise a planetary gear or any other suitable reduction gear solution comprising spur gear, helical gear or worm gear. Additionally or alternatively, in further or alternative embodiments of the present disclosure, de gear 25 may comprise one or more of a bevel gear, a hypoid gear a herringbone gear or a face gear. The gear and/or drive may be self-locking.

The gear arrangement adjusts/adapts the difference between the speed of the driving part of the motor 21 and the speed of the output drive 26 of the gear arrangement. A suitable design of toothed wheels (not illustrated) and/or the like of the gear arrangement provides this adaption. For example so that the output drive 26 of the gear arrangement runs with a reduced speed compared to the driving part of the motor 21.

A resilient mounting arrangement 2 comprising one or more resilient dampers 3, 4 configured to provide a resilient mounting of the drive arrangement 20 is provided in fig. 1 in order to illustrate various embodiments of the resilient mounting arrangements according to embodiments of the present disclosure when installed at a housing space 11 of a cover drive housing 10 (see e.g. figs. 3-4).

A first resilient damper 3 is provided. The damper is a co-molded damper 3 comprising a resilient damper arrangement 5 and a support arrangement 6.

Fig. 2 illustrates schematically and in perspective a co-molded damper 3 according to embodiments of the present disclosure. The co-molded damper 3 illustrated in fig. 2 is in fig. 1 attached to the drive arrangement 20. This attachment is provided by means of mechanical fastening means 7, 7a, 7b. These mechanical fastening means 7 may comprise at least one of a snap lock arrangement (as illustrated). Additionally or alternatively, the mechanical fastening means 7 may comprise one or more of a bayonet mount, one or more tabs, one or more notches, one or more holes for a fastener and/or one or more screws.

The support arrangement 6 may in embodiments of the present disclosure comprise a first part 7a of the fastening means 7 (see also fig. 2). For example, in embodiments of the present disclosure, the first part 7a of the fastening means may be unitary with and comprises the second material. In fig. 1 and 2, the first part 7a of the fastening means 7 comprises an elevated part that is configured to engage with a snap lock part of the drive arrangement 20.

In figs. 1 and 2, the support arrangement 6 of the damper comprises the first part 7a of the fastening means 7, preferably by that the first part 7a of the fastening means is unitary with and comprises the second material.

In embodiments of the present disclosure, the second part of the fastening means 7 may be integrated in/unitary with a part, such as a housing 21a, 25a of e.g. the gear arrangement 25 (as illustrated in fig. 1) or the motor 21.

In other embodiments of the present disclosure, the support arrangement 6 may not be attached to the cover drive housing (see fig. 3 or 4) or the drive arrangement 20 by means of fastening means. Instead, the co-molded damper may be placed unattached inside the housing space between the drive arrangement 20 and the cover drive housing 10.

In figs. 1 and 2, the support arrangement 6 is attached to the drive arrangement 20, Such as to a housing 21a, 25a of the drive arrangement 20. In other, alternative embodiments of the present disclosure, the support arrangement 6 may be attached to a housing 10 (see e.g. figs. 3 or 4) of the drive, preferably by means of mechanical fastening means as described above.

As can be seen in fig. 1, the drive arrangement 20 extends in a longitudinal direction LD between a first end 27 and a second end 28 of the drive arrangement. In embodiments of the present disclosure, the co-molded damper 3 may be arranged opposite to or at one of said ends 27, 28.

In some embodiments of the present disclosure, as illustrated in fig. 1, the co-molded damper 3 may provide one of the ends 27, 28 of the drive arrangement 20. In fig. 1, the co-molded damper provides the end 27 of the drive arrangement 20.

A rotor (not illustrated) of the drive motor 21 and/or a gear wheel of a gear arrangement (arranged inside the gear housing) of the drive arrangement 25 is/are in fig. 1 arranged to rotate around a rotation axis RAX1, wherein said rotation axis extends through the co-molded damper 3 at the drive arrangement end 27.

The co-molded damper 3 of fig. 1 is illustrated in more details in fig 2, with discloses a co-molded damper 3 according to embodiments of the present disclosure.

The resilient damper arrangement 5 (hatched part of the co-molded damper in fig. 2) comprises or consists of a first material and the support arrangement 6 (un-hatched part of the co-molded damper in fig. 2) comprises or consists of a second material. It is noted that the hatching is provided to ease distinguishing between the resilient damper arrangement 5 and the support arrangement 6.

The resilient damper arrangement 5 and the support arrangement 6 of the damper 3 are co-molded and the first material of the resilient damper arrangement 5 of the co-molded damper 3 is softer than the second material of the support arrangement 6 of the co-molded damper 3.

The first material of the resilient damper arrangement 5 may in embodiments of the present disclosure comprise or consist of a resilient material having a Shore A value below 90, such as below 80, preferably below 70. For example, in one or more embodiments of the present disclosure, the first material of the resilient damper arrangement 5 may comprise or consist of a resilient material having a Shore A value between 30 and 90, such as between 40 and 80, preferably between 50 and 70.

In one or more embodiments of the present disclosure, the first material of the resilient damper arrangement 5 may comprise or consist of a thermoplastic polyurethane TPU, a rubber material, thermoplastic elastomer TPE or silicone.

The second material of the support arrangement 6 of the co-molded damper 3 may in embodiments of the present disclosure comprise or consist of a material having an E modulus above 1000 MPa such as above 3000 MPa, preferably above 5000 MPa. For example, in one or more embodiments of the present disclosure, said the second material of the support arrangement 6 of the co-molded damper 3 may comprise or consist of a material having an E-Modulus (modulus of elasticity) between 1000 MPa and 15000 MPa, such as between 2000 MPa and 13000 MPa, preferably between 2000 MPa and 10000 MPa.

The shore value and/or E-modulus of the materials may be determined at e.g. 20°C

The second material of the support arrangement 6 of the co-molded damper 3 may in embodiments of the present disclosure comprise or consist of polymer, such as a plastic material such as a thermoplastic.

The second material of the support arrangement 6 of the co-molded damper 3 may in embodiments of the present disclosure comprise or consist of:
- a polybutylene terephthalate (PBT) plastic,
- an Akrylonitril-butadien-styren (ABS) plastic
- a polyamide (PA) plastic,
- polypropylene (PP)
- polycarbonate (PC)
- polyoxymethylene (POM), or
- polyvinylchloride (PVC).

The second material may or may not be fiber reinforced.

In one or more embodiments of the present disclosure, the second material of the support arrangement 6 and the first material of the resilient damper arrangement 5 of the co-molded damper 3 create an adhesive bond or a cohesive bond. Hereby the co-molded parts become unitary. In some embodiments, additives may be provided in the first material and/or second material in order to obtain the adhesive bond. Such additives may in embodiments of the present disclosure comprise one or more of polyamide (PA), polybutylenterephthalat (PBT), Polyphenylene Sulfide (PPS), polymer processing additives (PPA) and/or the like. One or more of these may e.g. be added as an additive to the first material.

In one or more embodiments of the present disclosure, the first and second materials of the damper cohesively bonds due to the material characteristics of the first and second material, thereby providing a unitary damper 3. For example ABS or PP may be cohesively compatible with TPE (thermoplastic elastomer) or TPU (thermoplastic polyurethane). For example a rubber such as EPDM can cohesively crosslink to a support.

In one or more embodiments of the present disclosure, the co-molded damper is positive engagement shaped. Interlocking of the support arrangement and the resilient damper arrangement may be achieved with a positive engagement shape. Hereby one or more designed shape complementing recess and protrusion ensure interlocking between the support arrangement and the resilient damper arrangement. In embodiments of the present disclosure, the co-molded damper 3 may substantially consist of the first and second material.

The co-molding may provide that the materials of the parts 5, 6 of the co-molded damper 3 cannot be separated without breaking or in other ways damaging the co-molded damper.

The resilient damper arrangement 5 may comprise a main body 5a that is co-molded with said support arrangement 6. The main body 5a may be a major body part of the damper arrangement 5 and may e.g. as illustrated extend around the support arrangement.

In fig. 1 and 2, the resilient damper arrangement extends substantially over/around the circumference of the support arrangement.

The support arrangement 6 may in embodiments of the present disclosure be annular and/or flange shaped.

The resilient damper arrangement comprises resilient contact parts, such as one or more annular parts (not illustrated), contact tongue(s) 8 and/or the like may extend from the main body 5a, e.g. radially.

In embodiments of the present disclosure, the resilient damper arrangement 5 comprises one or more resilient contact tongues 8 that are discretely arranged around the damper to contact different parts of the housing wall 10a.

In fig. 1 and 2, the resilient damper arrangement 5 of the co-molded damper 3 comprises three contact tongues 8, but it is understood that more than three or less than three contact tongues 8 may be provided in further embodiments of the present disclosure. For example, between 1 and 30 contact tongues 8, such as between 2 and 12 contact tongues 8, such as between 2 and 6 tongues 8 may be provided in embodiments of the present disclosure.

One or more of this/these contact tongues 8 may be tapering. In some embodiments of the present disclosure, one or more of this/these contact tongues 8 may be tapering. For example, the tongue(s) may comprise a proximate part 8a arranged proximate a main body 5a of the resilient damper arrangement 5, and a distal part 8b, where the proximal part 8a is wider than the distal part 8b. The distal part 8b may hence tend to temporarily deform more and/or earlier than the distal part 8a when the motor starts and the drive arrangement as a result thereof exerts a force on the resilient damper arrangement 5, as the distal part 8b may provide a lower resistance towards deflection/deformation than the proximate part 8a.

In fig. 1 and 2, the contact tongues 8 have a triangular, tapering shape, but it is understood that in other embodiments of the present disclosure (not illustrated), the contact tongue(s) 8 may have the tapering shape of a pyramid or a frustum of a pyramid, the tapering shape of a cone or a frustum of a cone, a rectangular shape and/or the like.

In fig. 1 and 2, the support arrangement 6 is unitary with and provides a housing part 9 of the drive arrangement 20. In the embodiments of fig. 1 and 2, the support arrangement 6 comprises or is a lid/end cap part or of the drive arrangement 20 in the form of lid/end cap part of the gear arrangement 25 housing 25a. It may however also or alternatively provide another part of a housing of the drive arrangement 20. Thus, when mounting the lid/end cap of the gear arrangement 25 in fig 1 by means of the fastening means, the damper 3 is automatically attached to the drive arrangement correctly/as intended.

The housing part 9 may as illustrated, in embodiments of the present disclosure, comprise one or more guiding members and/or holding members 26a, 26b, 26c which guides and/or holds one or more movable parts of the drive arrangement 20, in the present example movable parts of a gear arrangement. A movable part of the drive arrangement may for example comprise a motor or gear output shaft or a tacho and/or a hall sensor. A movable part of the gear arrangement may for example comprise for example a journal, bushing, bearing, gear shaft, planetary gear part, planetary gear crown, a toothed wheel and/or the like.

The resilient mounting arrangement 2 in fig 1 may comprise one or more further resilient dampers 4 that may not necessarily be co-molded. For example, these/(this damper may be made from a single piece resilient material, such as a material mentioned above and/or a material having a shore A value as mentioned the above. However, in further embodiments of the present disclosure, the one or more further dampers 4 may be co-molded and hence provide a co-molded damper comprising a first and a second material as described above.

In the embodiments of figs. 1 and 2, the resilient damper arrangement 5 comprises the main body 5a that extends over/around the circumference of the support arrangement 6. The support arrangement 6 may e.g. be annular and/or flange shaped.

In one or more embodiments the resilient damper arrangement 5 comprises parts which extend beyond the support arrangement 6 perpendicular to and/or radially from, the longitudinal direction LD.

In one or more embodiments the resilient damper arrangement 5 comprises parts which form the damper 3 extremities, such as perpendicular to the longitudinal direction LD.

Fig. 3 illustrates schematically a cross section of an architectural aperture cover drive 1 according to various embodiments of the present disclosure, seen in a direction towards the end 27 (see fig. 1). The above mentioned drive arrangement 20 and the mounting arrangement 2 comprising the co-molded damper 3 are arranged inside a housing space 11 of the cover drive housing 10 so that the mounting arrangement 2 provides a resilient mounting of the drive arrangement 20 in the housing space 11 of the architectural aperture cover drive 1.

The housing space 11 is placed between opposing outer walls 10a of the cover drive housing 10 which encloses the space 11.

The damper 3 is so to say arranged between the drive arrangement 20 and the cover drive housing 10 so as to provide the resilient mounting of the drive arrangement 20 in the housing space.

The co-molded damper 3 is arranged to extend between, such as abut, the opposing outer walls 10a of the cover drive housing 10. In fig. 3, the distal parts of the tongues 8 abut the walls 10a.

As can be seen from fig. 3, the tongues 8 of the resilient damper arrangement 5 of the co-molded damper 3 supports on/against interior surfaces 10b of the housing 10 wall(s) 10a facing the space 11. This support is provided in recessed portions 12 in the interior surface of the wall 10a, preferably by means of the distal portions 8b of the tongues. The recessed portions 23 help to maintain the co molded damper 3 and hence the drive arrangement 20 in the desired place and with the desired orientation inside the space 11.

The recessed portions 12 may comprise one or more recessed corner portions with interior wall surfaces 10b forming an angle a1 below 130°, such as below 100°, for example a right angle or an acute angle a1. The recessed portions 12 may alternatively provide an U shape or the like. A can be seen, integrated parts of the housing 10 walls 10a may provide the recesses.

The resilient mounting arrangement 2 of the drive arrangement 20 in the housing space 11 is due to the resiliency thereof configured so that the drive arrangement 20 is allowed to move relative to the cover drive housing 10 inside the housing space 11 in response to a torque applied by means of the electric motor 21. This movement may e.g. comprise rotary movements around one or more axes that are substantially coinciding with or parallel to the longitudinal direction LD (see fig. 1) of the drive arrangement 20 as illustrated by the dashed arrows AR.

The support part 6 of the co-molded damper 3 will move together with the drive arrangement and transfer the forces therefrom to the resilient damper arrangement 5 of the damper 3. The resilient damper arrangement hence deflects in response thereto.

In the co-molded damper may be clamped between the housing 10 wall(s) 10a to provide a tight and firm resilient mounting of the drive arrangement in the space 11, e.g. to prevent or reduce rattle noise.

In one or more embodiments of the present disclosure, the co-molded damper 3 may be clamped between opposing wall 10a parts of the cover drive housing 10. This may be provided by e.g. that the contact tongues 8 that extends in different directions are partly deformed from an uncompressed/un-deformed state and to a deformed/compressed equibrilium state.

The housing may in some embodiments comprise two half parts 13a, 13b such as half shells that are separated at edges 13, and the half parts may e.g. be fixed to each other by mechanical fastener(s) (not illustrated) such as screws, clips, a locking system integrated at the shells 13a, 13b and/or the like. Hence, assembling the half shells may compress the resilient damper arrangement 5.

In other embodiments of the present disclosure, the housing may be tubular (not illustrated in fig. 3) and the drive arrangement may be placed in the housing by introducing it into the space 11 of the tubular housing through an end portion of the housing, or the tubular housing may comprise two tubes that are interconnected between the ends of the tubes to provide a single housing.

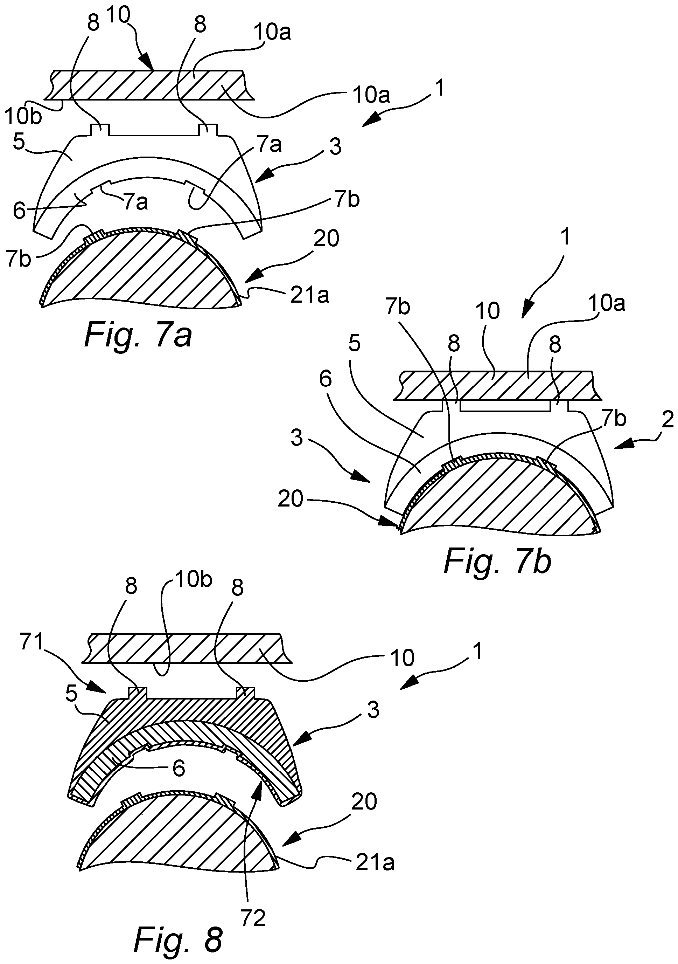

In one or more embodiments of the present disclosure, the support arrangement 6 may comprise position maintaining means configured to maintaining the co-molded damper in a predefined position relative to the drive arrangement 20 inside the housing space 11. Such position maintaining means may be provided by one or more of the mechanical fastening means 7a, 7b, a shape of the support arrangement, one or more recesses and/or protrusions (see e.g. references 7a-7b of figs. 7a-8).

Fig. 4 illustrates schematically a cross section of an architectural aperture cover drive 1 according to further embodiments of the present disclosure. Here, the resilient damper arrangement 5 of the co-molded damper 3 does not comprise a single main body with resilient tongues extending therefrom. Instead, the resilient tongues 8 extends from the support part 6, and are distributed around the support part. The resilient damper arrangement 5 hence comprises discrete tongues that are not interconnected by the first material. In other embodiments of the present disclosure, some of the tongues may be interconnected by means of the resilient first material, while some of the tongues 8 of the damper 3 may not be interconnected by the first material 5. The resilient damper arrangement 5 and the support arrangement 6 of the damper are co-molded as e.g. previously described.

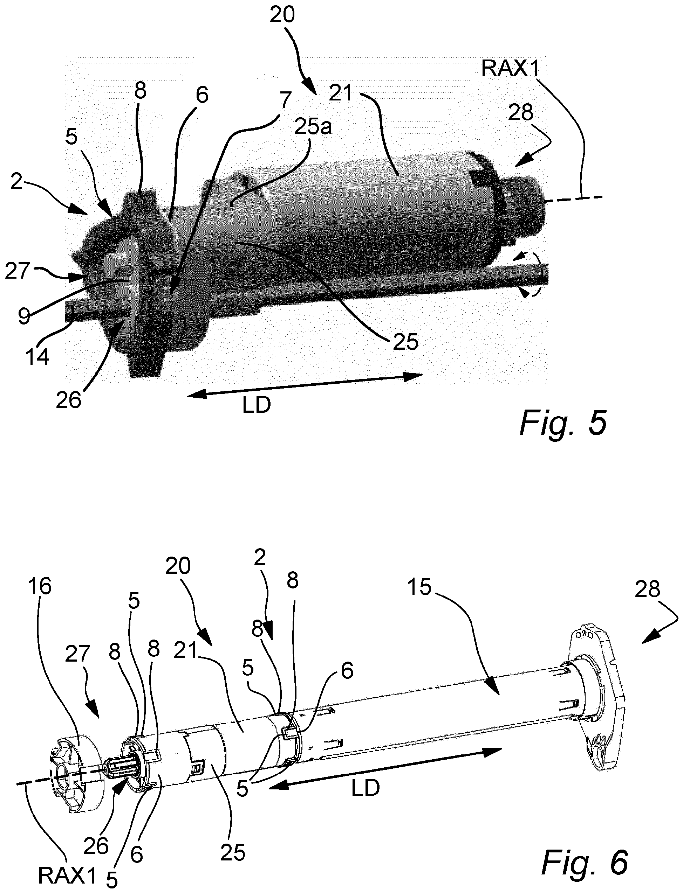

Fig. 5 illustrates schematically and in perspective, a drive arrangement 20 according to embodiments of the present disclosure. Here, the rotation axis RAX1 of the electric drive motor 21 is illustrated by dashed line, and as can be seen, the axis RAX1 of the drive motor is substantially parallel to the longitudinal direction LD of the drive arrangement. The co-molded damper 3 is fixed to the gear housing 25a by means of the mechanical fastening means 7.

The output drive 26 from the gear is connected to a driven rod 14 which is configured to be driven by the output 26 to rotate around the driven rod's longitudinal direction. The driven rod 14 may hence be directly or indirectly connected to e.g. a cover part of an architectural aperture cover (not illustrated) such as a shutter, a fabric, clothing or plastic/polymer sheet of material to be winded and unwinded, a pleated blind cover, a group of slats of a venetian blind, to move and/or change the orientation of these or the like.

It is generally understood that the drive arrangement 20 may be a tubular assembly such as a tubular motor assembly, or may be arranged in a top rail or bottom rail of for example a fenestration solution such as a building aperture covering, for example at a window such as at a door, a façade window or a roof window of a building.

Fig. 6 illustrates schematically and in perspective a tubular drive arrangement 20 according to further embodiments of the present disclosure. The tubular drive arrangement 20 comprises a gear 25, an electric drive motor 21, and a further equipment part 15 for e.g. battery storage, control system storage and/or the like. These units may as illustrated be arranged in a common, such as modularly built, tubular drive arrangement 20. This drive arrangement is configured to be arranged inside the cavity of an outer, tubular housing (not illustrated) that, when installed, may be configured to be rotated relative to the drive arrangement 20 around the drive arrangement 20 by means of the motor 21. A drive part 16 may be driven by the output drive 26 (which in the present example comprises a shaft), and the drive part 16 may engage directly or indirectly the outer tubular housing and the output drive 26, so that the outer tubular housing can be driven by the motor 21 that may be powered by a battery, such as a rechargeable battery in/at the storage 15.

As can be seen, the rotation axis RAX1 provided by the output drive 26 of the drive arrangement 20 may here be substantially coinciding with a center axis of the tubular drive arrangement that extends in the longitudinal direction of the drive arrangement.

The tubular drive arrangement 20 comprises resilient damper arrangement 5 such as resilient tongues 8 arranged on the gear 25 and motor 21 respectively. Hereby the resilient damper arrangement 5 such as resilient tongues 8 have contact to the tubular housing (not shown). In other embodiments the further equipment part 15 may employ similar damper arrangement 5 with resilient tongues 8. Tubular motors may use planetary reduction gears. In one or more embodiments the resilient damper arrangement 5 may be provided at a planetary gear housing arranged in a tube.

Fig. 7a and 7b illustrates schematically a cross section of further embodiments of a cover drive 1 comprising a co-molded damper 3 according to embodiments of the present disclosure, seen towards a cross sectional plane that is perpendicular to the longitudinal direction of the drive arrangement 20. Here, the resilient damper arrangement 5 is unhatched to avoid confusions with regards to what illustrates a cross sectional cut and what does not. The support arrangement 6 of the co-molded damper 3 comprises a support 6 in direct contact with the drive arrangement 20, in the present example the motor 21 housing 21a. The motor housing 21a comprises elevations/protrusions 7b that are configured to extend into recesses 7a in the support arrangement 6 and hence acts as mechanical fastening means 7 that enables holding the co-molded damper 3 in the desired position. The harder material of the support arrangement 6 may help to ease assembling of the cover drive 1 and/or hold the co-molded damper 3 in place during assembling and/or after assembling and possibly also during motor operation.

In the embodiment illustrated in figs. 7a and 7b, the co-molded damper 3 is hence not attached to the drive arrangement 20 or the housing 10. Instead, it rests between these 20, 10, such as is clamped between these. It is understood that more or fewer recesses 7a and protrusions 7b may be provided in further embodiments of the present disclosure. The recesses and protrusions 7a, 7b may substantially keep the support arrangement in a locked position and prevent the support arrangement 6 of the damper 3 from moving relative to the drive arrangement 20 when forces are exerted on the support arrangement 6 by means of the motor of drive arrangement 20. However, some parts of the resilient damper arrangement 5 that is co-molded with the support arrangement 6 may move relative to the support arrangement due to the resiliency of the first material.

In other embodiments, such elevations/protrusions 7a, 7b may be omitted.

Fig. 7a-7b illustrates a further embodiment where tongues 8 are provided that have a substantially rectangular cross-section as opposed to the tongues 8 illustrated in e.g. figs 1-4 where the tongue 8 cross-section has a tapering shape.

Fig. 8 illustrates schematically a cross sectional view of a co-molded damper 3 comprising co-molded parts 5, 6. Here, the support arrangement 6 is enclosed by the resilient damper arrangement 5. A thinner part 72 of the resilient damper arrangement 5 is placed between the drive arrangement 20 and the support arrangement 6, whereas a thicker/higher part 71 of the resilient damper arrangement 5 is placed between the support arrangement 6 and the housing 10 wall. Thus, during operation of the drive arrangement 20, vibrations may primarily be reduced/damped by means of the thicker part 71 of the resilient damper arrangement 5.

In some embodiments of the present disclosure, the material of the resilient damper arrangement 5 may help to increase friction between the damper 3 and the drive arrangement 20 and/or housing 10.

It is generally understood that the one of the support arrangement and the resilient damper arrangement hence may interfaces with, such as abuts, the cover drive housing and the other of the support arrangement and the resilient damper arrangement may interfaces with, such as abut, the drive arrangement. For example, in one or more of the embodiments illustrated in one or more of figs. 1-7b, the support arrangement 6 may be in direct contact with one of the drive arrangement 20 and the housing 10. In other embodiments of the present disclosure, the support arrangement 6 may be so to say hidden/enclosed in the damper 3 (see fig. 8), with e.g. the purpose of increasing the stiffness of the damper 3 to for example enable more easy damper installation and/or reduce damper installation errors.

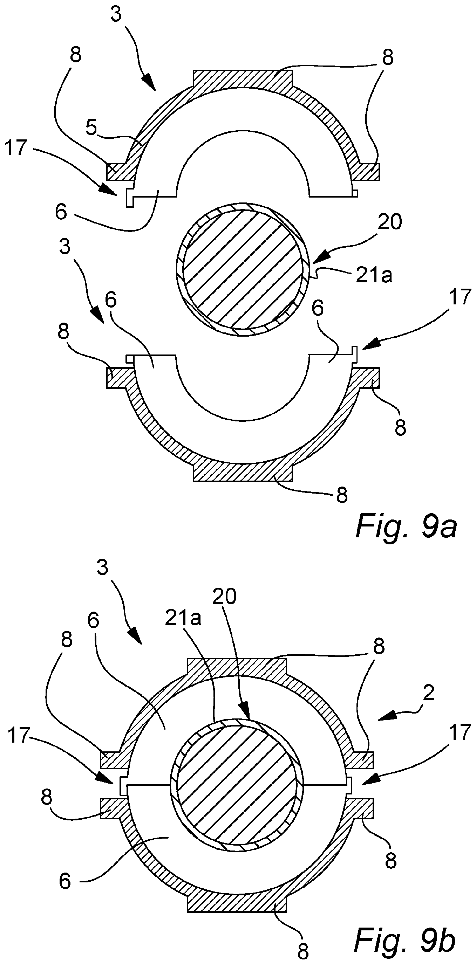

Figs. 9a-9b illustrates schematically a co-molded damper 3 according to embodiments of the present disclosure. The hatching at the damper 3 is as in fig. 1 provided to ease distinguishing between the first material of the resilient damper arrangement 5 and the second material of the support arrangement 6, and not to illustrate a cross sectional cut. The hatching at the drive arrangement however refers to a cross sectional cut.

In figs. 9a-9b, the damper 3 comprises two damper parts that are configured to be locked together in order to provide a clamping force around the drive arrangement 20. The two parts of the damper 3 are attached to each other by means of mechanical locking means 17 such as an integrated clips system, such as a snap lock system, screws or the like. When the mechanical locking means 17 locks the parts of the damper 3 together, the damper extends radially from the drive arrangement 20, around the drive arrangement 20. As can be seen, the resilient damper arrangement 5 may comprise one or more contact tongues 8 providing discrete contact points as e.g. previously described. The support parts 6 of the two co-molded damper 3 parts comprises the locking means 17 providing that the damper 3 parts can be locked together.

In further embodiments, the resilient damper arrangement 5 may also comprise a layer of the first material or another material between the support part 6 and the drive arrangement 20 that may help to provide a resilient part that can be compressed and help to provide a clamping force on the drive arrangement when the mechanical locking means 17 are engaged.

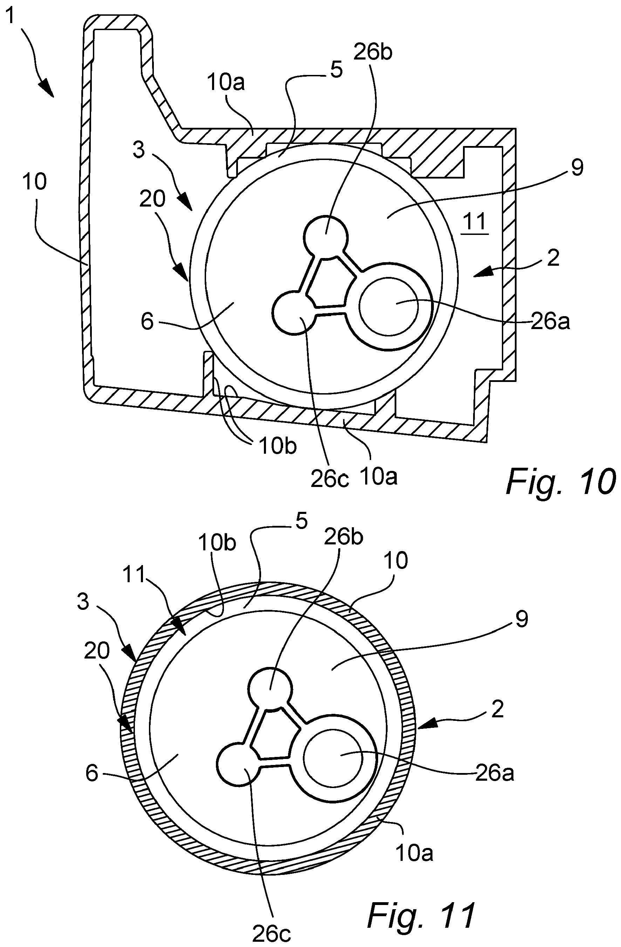

Fig. 10 illustrates schematically a damper 3 according to embodiments of the present disclosure, wherein contact tongues are omitted. Instead, the resilient damper arrangement 5 comprises an outer periphery that is substantially circular, (it may also on other embodiments be oval, rectangular or have another polygonal shaped outer periphery). The outer periphery of the resilient damper arrangement 5 hence engages with the housing 10 wall to provide the resilient mounting of the drive arrangement 20 in the housing space 11.

Fig. 11 illustrates schematically a damper 3 according to embodiments of the present disclosure, where the resilient damper arrangement 5 comprises a circular or annular outer periphery that is configured to abut the interior circular wall surface 10b facing the housing space 11 of a cylindrical housing 10. In fig 11, the annular outer periphery of the resilient damper arrangement 5 abuts the wall surface 10b substantially continuously around the space 11 in a plane that may be perpendicular to the longitudinal direction of the drive arrangement. In some embodiments, slits or cutouts (not illustrated) may be provided in the resilient damper arrangement 5, e.g. to ease installation.

In figs. 10 and 11, the damper 3 also provides a housing part 9 of the drive arrangement 20 as e.g. previously described, see e.g. fig 1 and 2. In further embodiments, the damper may 5 may comprise an annular ring (or a ring with a polygonal shaped outer periphery or the like) extending radially around the drive arrangement 20 housing. This may e.g. be the case in order to have the resilient damper arrangement 5 to abut an interior wall surface, such as a circular wall surface facing the housing space 11 of a cylindrical housing 10 to suspend the drive arrangement 20 in the space 11.

It is generally to be understood that in the different embodiments described above in relation to one or more of the various figures 1-11, the resilient mounting arrangement 2 may suspend the drive arrangement 20 in the housing space 11.

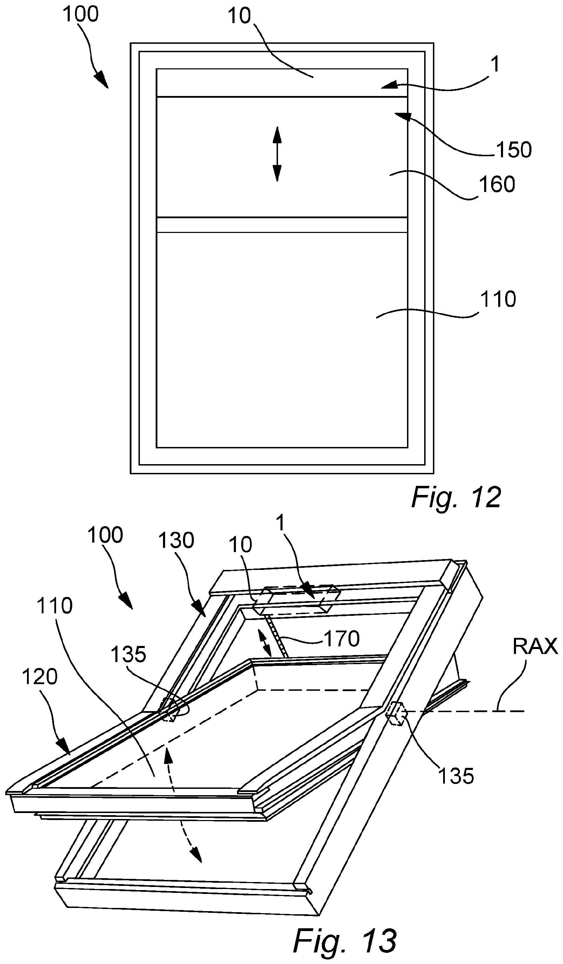

Fig. 12 illustrates schematically an architectural aperture cover 150 comprising an architectural aperture cover drive 1 according to embodiments of the present disclosure. In fig. 12, the architectural aperture cover 150 is a sun protection arrangement for a window 100, such as a "vertical" façade window or a roof window. Architectural aperture covers are often made in many different sizes and retrofitted. Low noise and compact size are usually important properties.

The sun protection arrangement 150 comprises the architectural aperture cover drive 1 and a cover part 160. The drive 1 is configured to control and move the cover part 160. The sun protection arrangement 150 is in fig. 12 a roller blind, and the cover part 160 is hence a flexible sheet to be winded and unwinded on a roller, cylinder or rod (not illustrated) of the sun protection arrangement 150. In other embodiments, the sun protection arrangement 150 may be or comprise a shutter such as a roller shutter, a venetian blind, a pleated blind, an awning and/or the like. Common to these different sun protection arrangement types may be that they comprises a cover part 160 configured to be controlled by the drive 1, and the position and/or orientation of the cover part (controlled by the cover drive 1) determines the amount of and/or intensity of light, such as sunlight, entering through a glass pane 110, such as an insulating glass pane, of the window 100. The window 100 may hence comprise the sun protection arrangement 150 that may be attached onto e.g. the frame arrangement of the window 100.

The glass pane 110 of the window is supported by a frame arrangement of the window and may comprise a plurality of glass sheets, such as two, three or more substantially parallel glass sheets, separated by a gap for improving heat insulation provided by the pane.

The cover part 160 of the sun protection arrangement may e.g. comprise a fabric, clothing or plastic/polymer sheet of material to be winded and unwinded, a pleated blind cover, a group of slats of a venetian blind configured to move and/or change the orientation of these, or the like.

In fig. 12, the drive arrangement 20 is arranged inside a top rail (but it may also be a bottom rail) of a sun screening/sun protection arrangement. In other embodiments, it may be arranged inside a tubular motor housing.

Fig. 13 illustrates schematically and in perspective a roof window 100 of the center hung type according to embodiments of the present disclosure (but it may also be e.g. a top hung roof window in further embodiments).

Here, the window 100 comprises a movable frame 120 configured to move relative to a fixation/fixed frame 130 by means of a hinge arrangement 135. The hinge arrangement 135 provides that the movable frame 120 will move by rotation around a rotation axis RAX relative to the fixation frame 130.

Thereby the movable frame 120, may also be referred to as a fenestration moving frame 120, can be moved from a closed position to an open position and from the open position to a closed position. The more open the movable frame 120 is, the more air may enter through the frame opening of the fixation frame between the movable frame and the fixation frame.

In order to control the opening and closing of the movable frame 120, the window 100 comprises an architectural aperture cover drive 1 according to embodiments of the present disclosure. This drive 1 may comprise an actuator 170 such as a chain actuator, a spindle actuator or arm actuator. Architectural aperture actuators are often made in many different sizes and retrofitted. Low noise and compact size are usually important properties.

The drive 1 comprises a drive arrangement 20 as previously described (not illustrated in fig. 13) inside the housing 10 for controlling the actuator 170. The drive 1 may be retrofitted to the window or be integrated in the window frame. In fig. 13, the drive 1 housing 10 is integrated in a top part of the fixation frame 130, but it may e.g. also be arranged at the movable frame 120, e.g. by retrofitting, in other embodiments of the present disclosure.

In one or more embodiments of the present disclosure, a housing 21a, 25a of the drive arrangement 20, such as a gear housing 25a of the drive arrangement, directly or indirectly supports the support arrangement 6 of the co-molded damper 3. Se e.g. one or more of figs 1, 2 5, 6, 7a-9b. The support arrangement 6 may in further embodiments of the present disclosure be attached to the housing 21a, 25a.

While the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations, substitutions or equivalent arrangements not heretofore described, but which are commensurate in scope with the present disclosure. Additionally, while various embodiments or aspects of the present disclosure have been described, it is to be understood that aspects of the present disclosure may include only some of the described embodiments or aspects or combinations of the various embodiments or aspects. Accordingly, the present disclosure is not to be seen as limited by the foregoing description.

## Claims

1. An architectural aperture cover drive (1) comprising
- a cover drive housing (10) comprising walls enclosing a housing space (11),
- a drive arrangement (20) arranged in said housing space (11), where said drive arrangement comprises an electric drive motor (21) comprising a driving part (26) and
- a resilient mounting arrangement (2) comprising one or more resilient dampers (3, 4) configured to provide a resilient mounting of the drive arrangement (20) in the housing space (11),
wherein at least one of said one or more resilient dampers (3, 4) is a co-molded damper (3) comprising a resilient damper arrangement (5) and a support arrangement (6),
wherein the resilient damper arrangement (5) comprises a first material and wherein the support arrangement (6) comprises a second material, wherein the resilient damper arrangement (5) and the support arrangement (6) are co-molded and wherein said first material is softer than the second material.

2. An architectural aperture cover drive (1) according to claim 1, wherein the support arrangement (6) is attached to one of the cover drive housing (10) or the drive arrangement (20) by means of mechanical fastening means (7, 7a, 7b), such as a locking system, such as at least one of a snap lock arrangement, a bayonet mount, one or more tabs, one or more notches, one or more holes for a fastener and/or screws.

3. An architectural aperture cover drive (1) according to claim 2, wherein the support arrangement (6) comprises a first part (7a) of the fastening means (7), such as wherein said first part (7a) of the fastening means is unitary with and comprises the second material.

4. An architectural aperture cover drive (1) according to any of the preceding claims, wherein the support arrangement (6) is attached to the drive arrangement (20), Such as to a housing (21a, 25a) of the drive arrangement.

5. An architectural aperture cover drive (1) according to any of the preceding claims, wherein the support arrangement (6) is unitary with and provides a housing part (9) of the drive arrangement (20), such as an end cap or a body part of the drive arrangement, preferably an end cap part or a body part of a gear arrangement (25) housing (25a) of the drive arrangement (20).

6. An architectural aperture cover drive (1) according to claim 5, wherein the housing part (9) comprises one or more guiding members and/or holding members (26a, 26b, 26c) which guides and/or holds one or more movable parts of the drive arrangement (20), such as one or more movable parts of a gear arrangement (25).

7. An architectural aperture cover drive (1) according to any of the preceding claims, wherein the first material comprises or consist of a resilient material having a Shore A value below 90, such as below 80, preferably below 70.

8. An architectural aperture cover drive (1) according to any of the preceding claims, wherein the second material of the support arrangement (6) comprises or consist of a material having an E modulus above 1000 MPa such as above 3000 MPa, preferably above 5000 MPa.

9. An architectural aperture cover drive (1) according to any of the preceding claims, wherein the second material of the support arrangement (6) comprises or consist of a polymer, such as a plastic material such as a thermoplastic and/or a polybutylene terephthalate (PBT) plastic, an Akrylonitril-butadien-styren (ABS) plastic or a polyamide (PA) plastic.

10. An architectural aperture cover drive (1) according to any of the preceding claims, wherein said resilient damper arrangement (5) comprises one or more resilient contact tongues (8), preferably wherein the one or more resilient contact tongues (8) comprises a tapering shape, such as comprising a proximate part (8a) arranged proximate a main body of the resilient damper arrangement (5), and a distal part (8b), where the proximal part is wider than the distal part.

11. An architectural aperture cover drive (1) according to any of the preceding claims, wherein said resilient damper arrangement (5) comprises a main body (5a) that is co-molded with said support arrangement (6), and wherein the resilient damper arrangement (5) comprises one or more contact parts (8) such as resilient contact tongues (8), extending from said main body (5a).

12. An architectural aperture cover drive (1) according to any of the preceding claims, wherein the housing space (11) is placed between opposing outer walls (10a) of the cover drive housing (10), and wherein the co-molded damper (3) is arranged to extend between, preferably abut, the opposing outer walls of the cover drive housing (10).

13. An architectural aperture cover drive (1) according to any of the preceding claims, wherein the drive arrangement (20) extends in a longitudinal direction (LD) between a first end (27) and a second end (28) of the drive arrangement (20), wherein the co-molded damper (3) is arranged opposite to one of said ends (27, 28) and/or or provides one of said ends (27, 28) of the drive arrangement.

14. An architectural aperture cover drive (1) according to any of the preceding claims, wherein the architectural aperture cover drive (1) is a drive of or for a sun protection arrangement (150) such as an awning, a roller shutter or a blind, such as a roller blind, pleated blind or venetian blind,
or
wherein the architectural aperture cover drive (1) is a drive of or for a fenestration moving frame (120) such as chain actuator, spindle actuator or arm actuator.

15. An architectural aperture cover (100, 150) comprising an architectural aperture cover drive (1) according to any of the preceding claims,
wherein the a architectural aperture cover is a sun protection arrangement (150) such as an awning, a roller shutter or a blind, such as a roller blind, pleated blind or venetian blind, or
wherein the architectural aperture cover is a window (100) or a door, and wherein the architectural aperture cover drive (1) is configured to move a movable frame (120) of the window or door.
